# EUROPÄISCHE PATENTSCHRIFT

(11) **EP 3 344 863 B1**
(45) Veröffentlichungstag und Bekanntmachung des Hinweises auf die Patenterteilung: **18.03.2020**
(21) Anmeldenummer: 16757919.2
(22) Anmeldetag: 31.08.2016
(51) Int. Cl.: F02D 41/02, F02D 41/14, F01N 3/025, F02D 41/00

(54) **VERFAHREN SOWIE VORRICHTUNG ZUR ABGASNACHBEHANDLUNG EINER BRENNKRAFTMASCHINE**
METHOD AND APPARATUS FOR EXHAUST GAS TREATMENT OF AN INTERNAL COMBUSTION ENGINE
PROCÉDÉ ET APPAREIL AU TRAITEMENT DE GAZ D'ÉCHAPPEMENT D'UN MOTEUR À COMBUSTION INTERNE

(30) Priorität: 03.09.2015 DE 102015216830
(43) Veröffentlichungstag der Anmeldung: 11.07.2018
(73) Patentinhaber: Volkswagen AG, 38440 Wolfsburg (DE)
(72) Erfinder: PAUKNER, Stefan, 38442 Wolfsburg (DE)
(74) Vertreter: Gulde & Partner
(86) Internationale Anmeldenummer: PCT/EP2016/070472
(87) Internationale Veröffentlichungsnummer: WO 2017/037093

(56) Entgegenhaltungen:
- EP-A1- 2 053 214
- EP-A1- 2 192 285
- EP-A1- 2 453 117
- EP-A1- 2 559 872
- EP-A1- 2 848 783
- EP-A1- 3 103 984
- WO-A1-2005/093235
- DE-A1-102004 001 249
- DE-A1-102013 008 826
- DE-A1-102013 202 196

## Beschreibung

Die Erfindung betrifft ein Verfahren sowie eine Vorrichtung zur Abgasnachbehandlung einer Brennkraftmaschine gemäß den unabhängigen Ansprüchen.

Die kontinuierliche Verschärfung der Abgasgesetzgebung sowie die Forderung nach weiterer Verbrauchsoptimierung stellen hohe Anforderungen an die Fahrzeughersteller, welche durch entsprechende Maßnahmen zur Reduktion der motorischen Rohemissionen und durch eine entsprechende Abgasnachbehandlung gelöst werden. Zur Reduktion des Verbrauchs wird ein sogenanntes Downsizing verfolgt, wobei bei vergleichbarer Leistung kleinere Motoren mit weniger Hubraum und/oder weniger Zylindern eingesetzt werden, sodass die Reibung im Brennraum sowie das Gewicht des Verbrennungsmotors reduziert werden können. Der damit primär verbundene Leistungsrückgang wird häufig durch eine Aufladung des Motors mittels eines Abgasturboladers kompensiert. Bei kleinen, aufgeladenen Motoren ist die Realisierung eines hohen Drehmomentes bei kleinen Drehzahlen (das sogenannte "Low End Torque") eine Herausforderung. Ein Verfahren zur Erhöhung des Drehmomentes stellt das sogenannte Scavenging dar. Dabei kommt es zu einer Überschneidung der Öffnungszeiten von Einlassventilen und Auslassventilen, sodass bei einem vorliegenden positiven Spülgefälle ein Teil der Frischluft das im Zylinder befindliche Abgas in den Abgaskrümmer spült, wodurch sich die Füllung des Brennraums im Vergleich zu einem konventionellen Betrieb ohne Ventilüberschneidung deutlich verbessert. Durch den erhöhten Massenstrom im Abgaskanal kann aufgrund einer erhöhten Turboladerdrehzahl ein höherer Ladedruck eingestellt werden, insbesondere bei niedrigen Drehzahlen. Bei einem effektiven Scavenging stellt sich jedoch ein überstöchiometrisches Abgas ein, das heißt, im Abgaskanal herrscht ein Sauerstoffüberschuss, wodurch die Funktion des Drei-Wege-Katalysators beeinträchtigt ist und es zu einer erhöhten Stickstoffoxid-Emission (NOx-Emission) kommt. Durch die diskutierte "Real-Drive-Emissions"-Gesetzgebung (RDE-Gesetzgebung) werden auch die Betriebspunkte bei niedrigen Drehzahlen und hohen Lasten für die Zertifizierung und Zulassung von Motoren und Fahrzeugen relevant, sodass eine Abgasnachbehandlungsmaßnahme für den Scavenging-Betrieb eines Verbrennungsmotors notwendig ist.

Aus der DE 10 2013 202 196 A1 ist ein Verfahren zur Abgasnachbehandlung bei einem Kraftfahrzeug mit einem Hybrid-Konzept aus Verbrennungsmotor und Elektromotor bekannt, bei dem der Verbrennungsmotor zumindest phasenweise in einem Scavenging-Betrieb betrieben wird, wobei der Sauerstoff aus dem überstöchiometrischen Abgas kurzzeitig im Drei-Wege-Katalysator eingespeichert wird, um einen Durchbruch der Stickstoffoxid-Emissionen (NOx-Emissionen) zu vermeiden und der Verbrennungsmotor durch Schließen der Auslassventile periodisch mit fettem, unterstöchiometrischem Gemisch betrieben wird, um die Sauerstoff-Einlagerungen im Drei-Wege-Katalysator auszuräumen. Dadurch wird jedoch der positive Effekt der Drehmoment-Anhebung bei niedrigen Drehzahlen wieder reduziert.

Die DE 10 2013 218 581 A1 offenbart ein Verfahren zum Betreiben eines Verbrennungsmotors, wobei für einen Zylinder des Verbrennungsmotors die Zufuhr mittels eines Einlassventils gesteuert wird, wobei ein Scavenging durchgeführt wird. Dabei wird das Scavenging während der Regeneration einer Abgasnachbehandlungsvorrichtung eingesetzt.

Darüber hinaus ist aus der DE 11 2012 001 097 A1 ein Verfahren und ein System zur Steuerung einer Zweistoff-Motors mit einem Abgasnachbehandlungssystem. Dabei wird in einem ersten Betriebszustand des Verbrennungsmotors den Brennräumen des Verbrennungsmotors ein erster Kraftstoff und in einem zweiten Betriebszustand ein zweiter Kraftstoff zugeführt, wobei sich der erste Kraftstoff und der zweite Kraftstoff unterscheiden. In einem dritten Betriebszustand wird der erste Kraftstoff als ein Reduktionsmittel für das Abgasnachbehandlungssystem zugeführt.

Die EP 2 053 214 A1 offenbart ein Sechstaktmotor, bei dem in dem Abgasstrang ein Regenerator oder eine Abgasturbine angeordnet ist, mit welcher die Abwärme des Verbrennungsmotors ausgenutzt wird.

Ferner ist aus der EP 2 787 203 A1 ein Steuergerät zur Steuerung eines Verbrennungsmotors bekannt. Die Steuervorrichtung ermittelt ob ein Gasdurchleitung vom Ansaugtrakt in den Abgaskanal auftritt oder wahrscheinlich ist, wobei die Einspritzung von Kraftstoff in einem solchen Fall erst dann einsetzt, wenn das Auslassventil geschlossen ist und der unverbrannte Kraftstoff nicht in den Abgaskanal gelangen kann.

Aus der nachveröffentlichten EP 3 103 984 A1 ist ein Verfahren sowie eine Brennkraftmaschine mit einer Vorrichtung zur Abgasnachbehandlung bekannt, bei dem die Brennkraftmaschine in einem Scavenging-Betrieb betrieben wird, überstöchiometrisches Abgas in den Abgaskanal eingeleitet wird, Kraftstoff stromauf eines Drei-Wege-Katalysators eindosiert wird und das Abgas dann durch den Drei-Wege-Katalysator nachbehandelt wird.

Der Erfindung liegt nun die Aufgabe zugrunde, das Drehmoment bei niedrigen Drehzahlen anzuheben und gleichzeitig eine hocheffiziente Abgasnachbehandlung durch den Drei-Wege-Katalysator zu ermöglichen.

Die Aufgabe wird durch ein Verfahren zur Abgasnachbehandlung einer Brennkraftmaschine gelöst, wobei die Brennkraftmaschine mittels eines Verdichters mit Frischluft versorgt wird und eine verstellbare Ventilsteuereinrichtung für die Einlassventile und/oder die Auslassventile aufweist. Die Brennkraftmaschine ist ferner mit einem Abgaskanal verbunden, wobei im Abgaskanal ein erster Drei-Wege-Katalysator angeordnet ist und in Strömungsrichtung eines Abgases der Brennkraftmaschine durch den Abgaskanal stromab eines Auslasses der Brennkraftmaschine und stromauf des ersten Drei-Wege-Katalysators ein Einspritzventil zur Einbringung von Kraftstoff in den Abgaskanal angeordnet ist. Das Verfahren umfasst folgende Schritte:
- Betreiben der Brennkraftmaschine in einem Scavenging-Betrieb,
- Einleiten eines überstöchiometrischen Abgases in den Abgaskanal,
- Eindosieren von Kraftstoff in den Abgaskanal stromauf des ersten Drei-Wege-Katalysators, sodass sich am Eingang des ersten Drei-Wege-Katalysators ein stöchiometrisches Abgas einstellt,
- Nachbehandeln des stöchiometrischen Abgases durch den ersten Drei-Wege-Katalysator.

Der Begriff Scavenging-Betrieb der Brennkraftmaschine bezeichnet einen Betriebsmodus, bei dem die Ventilöffnungszeiten der Einlass- und/oder Auslassventile der Brennkraftmaschine so gesteuert werden, dass es zu einer Überschneidung der Öffnungszeiten der Einlassventile mit denen der Auslassventile kommt (sogenannte Ventilüberschneidung). Dabei werden die Einlassventile bereits geöffnet, wenn die Auslassventile noch nicht geschlossen sind. Es versteht sich, dass der Scavenging-Betrieb der Brennkraftmaschine neben anderen Betriebsmodi vorgesehen sein kann, insbesondere solchen ohne Ventilüberschneidung, und in Abhängigkeit von vorbestimmten Bedingungen, insbesondere einem Betriebspunkt der Brennkraftmaschine, durchgeführt werden kann. Unter einer verstellbaren Ventilsteuereinrichtung ist in diesem Zusammenhang beispielsweise ein Nockenwellenversteller zu verstehen, durch welchen die Öffnungszeiten der Einlassventile und/oder der Auslassventile zueinander verändert werden können. Somit kann die für den Scavenging-Betrieb notwendige Überschneidung der Öffnungszeiten von Einlassventilen und Auslassventilen beispielsweise bei niedrigen Drehzahlen erreicht werden. Durch eine Verstellung des Nockenwellenverstellers ist es möglich, dass es an anderen Betriebspunkten, beispielsweise bei hohen Drehzahlen und hoher Last zu keiner Überschneidung der Ventilöffnungszeiten von Einlassventilen und Auslassventilen kommt.

Der Vorteil der vorgeschlagenen Lösung ist darin zu sehen, dass durch Überschneidung der Ventilöffnungszeiten von Einlassventilen und Auslassventilen eine verbesserte Restgasspülung aus den Brennräumen der Brennkraftmaschine erreicht wird, was eine verbesserte Füllung der Brennräume sowie eine erhöhte Drehzahl der Turbine des Turboladers bewirkt, wodurch sich das Drehmoment der Brennkraftmaschine steigern lässt. Bei hohen Spülraten und unter Berücksichtigung der Tatsache, dass einer Anfettung des Verbrennungsluftgemischs durch Zündbedingungen beziehungsweise Rußbildung Grenzen gesetzt sind, kann sich ein überstöchiometrisches Abgas einstellen. Durch das Eindosieren von Kraftstoff in den Abgaskanal stromauf des ersten Drei-Wege-Katalysators kann ein stöchiometrisches Abgas erzeugt werden, welches sich effizient durch den Drei-Wege-Katalysator reinigen lässt. Somit kann eine wirksame Abgasreinigung, insbesondere eine wirksame Reduktion der beim Scavenging-Betrieb entstehenden Stickstoffoxide, durch den ersten Drei-Wege-Katalysator auch bei einem Scavenging-Betrieb der Brennkraftmaschine erfolgen.

Durch die in den abhängigen Ansprüchen aufgeführten Maßnahmen sind vorteilhafte Verbesserungen des im unabhängigen Anspruch angegebenen Verfahrens möglich.

Das Nachbehandeln des stöchiometrischen Abgases durch den ersten Drei-Wege-Katalysator umfasst das Ein- und Durchströmen des Abgases, also des Mischabgases aus motorischem Abgas und zudosiertem Kraftstoff, in und durch den Drei-Wege-Katalysator, der mittels seiner Drei-Wege-katalytischen Beschichtung die katalytische Umsetzung von unverbrannten Kohlenwasserstoffen (HC), Kohlenmonoxid (CO) und von Stickoxiden (NOx) bewirkt.

Erfindungsgemäß ist vorgesehen, dass im Abgaskanal stromauf des ersten Drei-Wege-Katalysators ein zweiter Drei-Wege-Katalysator vorgesehen ist, wobei der Kraftstoff zwischen dem zweiten Drei-Wege-Katalysator und dem ersten Drei-Wege-Katalysator in den Abgaskanal eindosiert wird. Da beim Scavenging-Betrieb auch unverbrannte Kohlenwasserstoffe (HC) zusammen mit der Spülluft in den Abgaskanal eingetragen werden, können diese unverbrannten Kohlenwasserstoffe auf dem zweiten Katalysator exotherm umgesetzt werden. Da auch die Umsetzung des durch das Einspritzventil in den Abgaskanal eingebrachten Kraftstoffs auf dem ersten Drei-Wege-Katalysator exotherm erfolgt, werden die beiden exothermen Reaktionen auf die beiden Katalysatoren verteilt, wodurch eine thermische Schädigung oder eine vorzeitige Alterung einer der Drei-Wege-Katalysatoren vermieden wird.

Gemäß einer weiteren Verbesserung des Verfahrens ist vorgesehen, dass stromab des ersten Drei-Wege-Katalysators eine Lambda-Sonde im Abgaskanal angeordnet ist, wobei eine Dosierung der Kraftstoffmenge durch das Einspritzventil durch die Lambda-Sonde geregelt wird. Da die genaue Frischluftmasse in den Brennräumen der Brennkraftmaschine messtechnisch nicht erfasst werden kann, wird das Verbrennungsluftverhältnis durch die Stellung der Drosselklappe und die Einspritzmenge gesteuert. Damit das Verbrennungsluftverhältnis im Scavenging-Betrieb nicht zu weit angefettet werden muss, was zu einer erhöhten Partikelemission und einer Bauteilschädigung des Drei-Wege-Katalysators durch den exothermen Umsatz unverbrannter Bestandteile führen kann, wird das Verbrennungsluftverhältnis so gewählt, dass sich im Scavenging-Betrieb ein mageres, überstöchiometrisches Abgasluftverhältnis einstellt. Dadurch können die Stickstoffoxid-Emissionen (NOx-Emissionen) jedoch nicht mehr wirksam durch den Drei-Wege-Katalysator reduziert werden. Durch die Lambda-Sonde stromab des ersten Drei-Wege-Katalysators kann die durch das im Abgaskanal angeordnete Einspritzventil eindosierte Kraftstoffmenge so geregelt werden, dass sich im Abgaskanal stromauf des ersten Drei-Wege-Katalysators ein stöchiometrisches Abgasluftverhältnis einstellt, sodass eine effiziente Abgasreinigung durch den ersten Drei-Wege-Katalysator begünstigt wird.

Gemäß einer weiteren Verbesserung des Verfahrens ist vorgesehen, dass der Verdichter von einer Turbine im Abgaskanal angetrieben wird. Durch eine Turbine im Abgas kann auf mechanischen oder elektrischen Antrieb des Verdichters verzichtet werden, wodurch sich keine Verschlechterung des Wirkungsgrades der Brennkraftmaschine ergibt. Ein Verdichter und ein entsprechendes Druckgefälle zwischen dem Ansaugkanal der Brennkraftmaschine und dem Abgaskanal der Brennkraftmaschine ist notwendig, damit die Überschneidung der Ventilöffnungszeiten im Scavenging-Betrieb zu einer effizienten Spülung der Brennräume genutzt werden kann und nicht zu einer Abgasrückführung aus dem Abgaskanal in die Brennräume führt.

Besonders vorteilhaft ist dabei, wenn die Eindosierung des Kraftstoffes in den Abgaskanal stromab der Turbine und stromauf des ersten Drei-Wege-Katalysators erfolgt. Bei einer Eindosierung stromauf der Turbine kommt es als Sekundäreffekt zu einer exothermen Umsetzung des Kraftstoffes mit dem Restsauerstoff im Abgaskanal, wodurch zusätzlich Energie zum Antrieb der Turbine bereitgestellt wird. Allerdings ist es für die Abgasreinigung sinnvoll, den Kraftstoff erst stromab der Turbine einzudosieren, da dieser Sekundäreffekt dort nicht auftritt und somit eine exaktere Anpassung der benötigten Kraftstoffmenge an den vorhandenen Restsauerstoff im Abgaskanal möglich ist.

Erfindungsgemäß wird eine Brennkraftmaschine mit einer Vorrichtung zur Abgasnachbehandlung vorgeschlagen, welche eine variable Ventilsteuereinrichtung, insbesondere einen Nockenwellenversteller, aufweist, mit der die Öffnungszeiten der Einlassventile und/oder der Auslassventile veränderbar sind, mit einem Verdichter zur Frischluftversorgung der Brennkraftmaschine, sowie mit einem Abgaskanal, wobei im Abgaskanal in Strömungsrichtung eines Abgases durch den Abgaskanal stromab eines Auslasses der Brennkraftmaschine ein erster Drei-Wege-Katalysator angeordnet ist, wobei stromab des Auslasses und stromauf des ersten Drei-Wege-Katalysators ein Einspritzventil zur Einbringung von Kraftstoff in den Abgaskanal angeordnet ist, wobei die Brennkraftmaschine zur Durchführung eines vorstehend beschriebenen Verfahrens zur Abgasnachbehandlung ausgebildet ist. Durch eine solche Vorrichtung kann das eingangs beschriebene Verfahren durchgeführt werden, sodass eine effiziente Abgasnachbehandlung durch den Drei-Wege-Katalysator auch bei einem Scavenging-Betrieb der Brennkraftmaschine erfolgen kann.

Erfindungsgemäß ist vorgesehen, dass stromab des Auslasses und stromauf des ersten Drei-Wege-Katalysators ein zweiter Drei-Wege-Katalysator im Abgaskanal angeordnet ist. Dadurch kann eine besonders wirksame Abgasreinigung erzielt werden, da sich der zweite Drei-Wege-Katalysator schneller erwärmt und damit schneller eine Betriebstemperatur erreicht, an der die katalytische Wirkung zur Abgasreinigung erzielt wird.

Gemäß einer vorteilhaften Weiterbildung ist vorgesehen, dass zumindest einer der Drei-Wege-Katalysatoren als ein Partikelfilter mit einer drei-Wege-katalytisch wirksamen Beschichtung ausgeführt ist. Durch einen Partikelfilter können zusätzlich Rußpartikel aus dem Abgas gefiltert werden. Durch eine drei-Wege-katalytisch wirksame Beschichtung auf dem Partikelfilter kann die abgasreinigende Wirkung eines Drei-Wege-Katalysators erreicht werden. Zudem kann die Kraftstoffeinspritzung in den Abgaskanal auch zur Aufheizung des Abgases zur Regeneration des Partikelfilters genutzt werden, sodass hier keine zusätzlichen Komponenten notwendig sind und die bereits vorhandenen Komponenten zur Durchführung des erfindungsgemäßen Verfahrens genutzt werden können.

Gemäß einer vorteilhaften Weiterbildung ist vorgesehen, dass der zweite Drei-Wege-Katalysator motornah und der erste Drei-Wege-Katalysator motorfern, insbesondere in einer Unterbodenlage eines Kraftfahrzeuges, angeordnet sind. Dabei wird unter einer motornahen Anordnung ein mittlerer Abgaslaufweg von höchstens 50 cm, insbesondere von höchstens 30 cm, nach dem Auslass der Brennkraftmaschine verstanden. Durch diese Nähe zum Verbrennungsmotor wird ein besonders schnelles Anspringen des zweiten Drei-Wege-Katalysators nach einem Kaltstart erreicht, sodass dieser auch als Startkatalysator fungiert. Hingegen verhindert die motorferne Anordnung des ersten Drei-Wege-Katalysators, dass dieser bei der vorgesehenen exothermen Reaktion zu heiß und somit thermisch geschädigt wird. Zudem steht im Unterbodenbereich relativ viel Bauraum zur Verfügung, sodass eine einfache Montage des zweiten Drei-Wege-Katalysators möglich ist. Unter einer motorfernen Anordnung wird ein mittlerer Abgaslaufweg von mindestens 80 cm, insbesondere von mindestens 100 cm, nach dem Auslass der Brennkraftmaschine verstanden.

Gemäß einer weiteren vorteilhaften Weiterbildung ist vorgesehen, dass stromauf des zweiten Drei-Wege-Katalysators, zwischen dem zweiten Drei-Wege-Katalysator und dem ersten Drei-Wege-Katalysator sowie stromab des ersten Drei-Wege-Katalysators jeweils eine Lambda-Sonde angeordnet ist. Somit lässt sich das Verbrennungsluftverhältnis sowie das Abgasluftverhältnis am ersten und am zweiten Drei-Wege-Katalysator einregeln, sodass auch außerhalb des Scavenging-Betriebs eine entsprechende Anpassung der Luftmenge derart erfolgen kann, dass eine möglichst gute Abgasreinigung durch die beiden Drei-Wege-Katalysatoren und gegebenenfalls weitere im Abgaskanal angeordnete Komponenten der Abgasnachbehandlung erfolgen kann.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Ausführungsbeispiel einer Brennkraftmaschine mit Ansaugtrakt und Abgaskanal zur Durchführung eines erfindungsgemäßen Abgasnachbehandlungsverfahrens,
- Figur 2: ein weiteres Ausführungsbeispiel einer Brennkraftmaschine mit Ansaugtrakt und Abgaskanal zur Durchführung eines erfindungsgemäßen Abgasnachbehandlungsverfahrens,
- Figur 3: ein weiteres Ausführungsbeispiel einer Brennkraftmaschine mit Ansaugtrakt und Abgaskanal zur Durchführung eines erfindungsgemäßen Abgasnachbehandlungsverfahrens,
- Figur 4: ein schematisches Bild zum Öffnen und Schließen der Einlass- und Auslassventile sowie der Überschneidung der Ventilöffnungszeiten bei einem Scavenging-Betrieb der Brennkraftmaschine, und
- Figur 5: ein schematisches Bild einer aufgeladenen Brennkraftmaschine sowie eines Spülvorgangs bei einer Überschneidung der Ventilöffnungszeiten von Einlass- und Auslassventilen beim Scavenging-Betrieb.

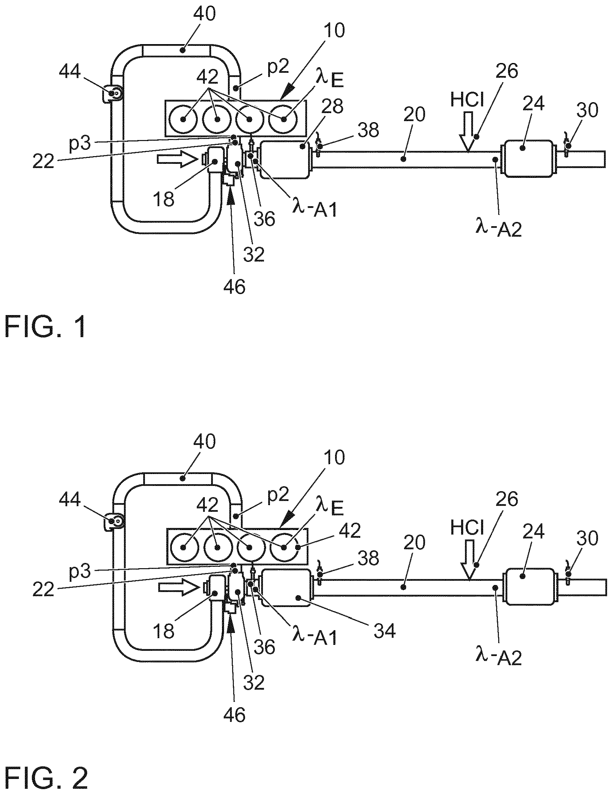

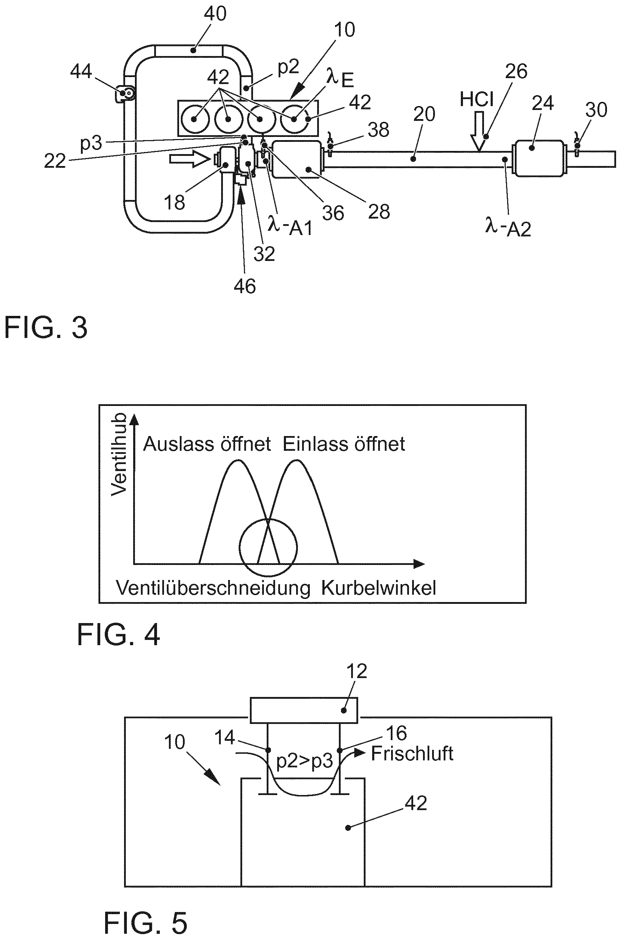

Figur 1 zeigt eine Brennkraftmaschine 10 mit einem Ansaugtrakt 40 sowie mit einem Abgaskanal 20. Die Brennkraftmaschine 10 ist beispielsweise ein mit einem Turbolader 46 aufgeladener, fremdgezündeter Verbrennungsmotor. Im Ansaugtrakt 40 ist ein Verdichter 18 des Turboladers 46 angeordnet, mit dem Luft, mit gegenüber Umgebungsdruck erhöhtem Druck, in die Brennräume 42 der Brennkraftmaschine gefördert wird. Ferner ist im Ansaugtrakt eine Drosselklappe 44 angeordnet, über welche die den Brennräumen 42 zugeführte Luftmenge gesteuert werden kann. Im Abgaskanal 20, welcher sich an einen Auslass 22 der Brennräume 42 der Brennkraftmaschine 10 anschließt, sind in Strömungsrichtung eines Abgases der Brennkraftmaschine 10 eine Turbine 32 des Turboladers 46, ein zweiter Drei-Wege-Katalysator 28 sowie ein erster Drei-Wege-Katalysator 24 angeordnet. Die Brennräume 42 der Brennkraftmaschine 10 sind über in Figur 5 dargestellte Einlassventile 14 und Auslassventile 16, welche zum Ladungswechsel eines Verbrennungsgemischs im Brennraum 42 geöffnet werden können, verschließbar. Im Abgaskanal 20 ist in Abgasstromrichtung stromab des zweiten Drei-Wege-Katalysators 28 und stromauf des ersten Drei-Wege-Katalysators 24 ein Einspritzventil 26 zur Eindosierung von Kraftstoff in den Abgaskanal 20 angeordnet. Dabei ist der erste Drei-Wege-Katalysator bevorzugt in einer Unterbodenlage eines Kraftfahrzeuges angeordnet, während der zweite Drei-Wege-Katalysator 28 in einer motornahen Position angeordnet ist. Stromab des ersten Drei-Wege-Katalysators 24 ist eine Lambda-Sonde 30 zur Regelung der über das Einspritzventil 26 zugeführten Kraftstoffmenge vorgesehen. Stromauf und stromab des zweiten Drei-Wege-Katalysators 28 ist jeweils eine weitere Lambda-Sonde 36, 38 vorgesehen, über welche das Verbrennungsluftverhältnis λ_{E} der Brennkraftmaschine 10 regelbar ist.

Im Betrieb der Brennkraftmaschine 10 wird Luft durch den Ansaugtrakt 40 angesaugt und durch den Verdichter 18 verdichtet, sodass sich im Ansaugtrakt 40 stromauf der Einlassventile 14 ein Ladedruck p2 einstellt. Der Ladedruck p2 ist größer als ein Druck p3 im Abgaskanal 20 stromab der Auslassventile 16 (Abgasgegendruck). In einem Scavenging-Betrieb der Brennkraftmaschine 10 werden die Öffnungszeiten der Einlassventile 14 und die Auslassventile 16 über eine in Figur 5 symbolisierte Ventilsteuereinrichtung 12 derart verändert, dass es zu einer Überschneidung der Öffnungszeiten von Einlassventilen 14 und Auslassventilen 16 kommt (Ventilüberschneidung). Dabei öffnen sich die Einlassventile 14 schon, bevor sich die Auslassventile 16 schließen. Durch den Druckgradienten p2 > p3 zwischen Ansaugtrakt 40 und Abgaskanal 20 kommt es zu einer Spülung der Brennräume 42 mit Frischgas, da Frischluft durch die Einlassventile 14 in den Brennraum 42 und von dort aus direkt durch die Auslassventile 16 in den Abgaskanal 20 strömen kann. Dies bewirkt eine verbesserte Restgasspülung, also ein verbessertes Ausbringen von verbrannten Gasen aus dem Brennraum 42, eine erhöhte Füllung der Brennräume 42 mit Frischgas sowie eine erhöhte Drehzahl der Turbine 32 des Turboladers 46. Diese Ventilüberschneidung ist in Figur 4 dargestellt. Die Verstellung der Öffnungszeiten der Einlassventile 14 und Auslassventile 16 kann beispielsweise über einen Nockenwellenversteller durch Verdrehung der Einlass- und/oder Auslassnockenwelle zur Ventilsteuerung erfolgen. Durch das beschriebene Verfahren lässt sich das Drehmoment der Brennkraftmaschine 10 steigern.

Da die genaue Frischluftmasse in den Brennräumen 42 der Brennkraftmaschine 10 messtechnisch nicht erfasst werden kann, wird das Verbrennungsluftverhältnis λ_{E} in den Brennräumen 42 durch die Stellung der Drosselklappe 44 und die Einspritzmenge des Kraftstoffes in die Brennräume 42 der Brennkraftmaschine 10 gesteuert. Um eine zu starke Anfettung des Gemischs in den Brennräumen 42 zu vermeiden, wird im Scavenging-Betrieb ein Abgasluftverhältnis λ_{A1} > 1, also ein Sauerstoffüberschuss im Abgaskanal 20 stromab eines Auslasses 22 der Brennkraftmaschine 10 eingestellt. Bei diesem mageren Abgasluftverhältnis können Stickstoffoxidemissionen nicht mehr durch einen Drei-Wege-Katalysator 24, 28 reduziert werden. Um ein stöchiometrisches Abgasluftverhältnis λ_{A2} = 1 am Eingang des ersten Drei-Wege-Katalysators 24 einzustellen, wird stromauf des ersten Drei-Wege-Katalysators 24 und stromab des zweiten Drei-Wege-Katalysators 28 Kraftstoff (HC) in den Abgaskanal 20 eingespritzt. Die Menge des eingespritzten Kraftstoffs ist durch eine Lambda-Sonde 30 stromab des ersten Drei-Wege-Katalysators 24 regelbar. Durch das stöchiometrische Abgasluftverhältnis können alle gasförmigen Schadstoffe des Abgases effektiv durch den ersten Drei-Wege-Katalysator 24 konvertiert werden.

In Figur 2 ist ein alternatives Ausführungsbeispiel einer erfindungsgemäßen Brennkraftmaschine 10 mit einer Vorrichtung zur Abgasnachbehandlung dargestellt. Bei weitestgehend gleichem Aufbau ist der zweite Drei-Wege-Katalysator 28 als ein Partikelfilter 34 mit einer drei-Wege-katalytisch wirksamen Beschichtung ausgeführt. Dadurch ist neben einer effizienten Abgasreinigung zusätzlich das Zurückhalten von Rußpartikeln möglich. Dabei kann die Brennkraftmaschine 10 zur Regeneration des Partikelfilters 34 mit einem mageren Gemisch betrieben werden und Kraftstoff stromab des Partikelfilters 34 in den Abgaskanal 20 eindosiert werden, um am ersten Drei-Wege-Katalysator 24 ein stöchiometrisches Abgas zu erreichen, welches durch den ersten Drei-Wege-Katalysator 24 gereinigt werden kann.

Alternativ kann auch wie in Figur 3 dargestellt der erste Drei-Wege-Katalysator 24 als ein Partikelfilter 34 mit einer drei-Wege-katalytisch wirksamen Beschichtung ausgeführt werden. Dabei kann das Einspritzventil 26 und die Eindosierung des Kraftstoffes in einem vom Scavenging-Betrieb verschiedenen Betriebspunkt dazu genutzt werden, um den Abgaskanal 20 aufzuheizen und somit eine Regeneration des Partikelfilters 34 zu ermöglichen.

### Bezugszeichenliste

- 10: Brennkraftmaschine
- 12: Ventilsteuereinrichtung
- 14: Einlassventil
- 16: Auslassventil
- 18: Verdichter
- 20: Abgaskanal
- 22: Auslass
- 24: erster Drei-Wege-Katalysator
- 26: Einspritzventil
- 28: zweiter Drei-Wege-Katalysator
- 30: Lambda-Sonde
- 32: Turbine
- 34: Partikelfilter
- 36: Lambda-Sonde
- 38: Lambda-Sonde
- 40: Ansaugtrakt
- 42: Brennräume
- 44: Drosselklappe
- 46: Turbolader
- λ_{E}: Verbrennungsluftverhältnis
- λ_{A1}: Abgasluftverhältnis vor HC-Eindosierung
- λ_{A2}: Abgasluftverhältnis nach HC-Eindosierung
- HC: Kohlenwasserstoffe
- p2: Druck im Ansaugtrakt stromauf der Einlassventile / Ladedruck
- p3: Druck im Abgaskanal stromab der Auslassventile / Abgasgegendruck

## Patentansprüche

1. Verfahren zur Abgasnachbehandlung einer Brennkraftmaschine (10), wobei die Brennkraftmaschine (10) mittels eines Verdichters (18) mit Frischluft versorgt wird und eine verstellbare Ventilsteuereinrichtung (12) für die Einlassventile (14) und/oder die Auslassventile (16) aufweist, und wobei die Brennkraftmaschine (10) mit einem Abgaskanal (20) verbunden ist, und im Abgaskanal (20) ein erster Drei-Wege-Katalysator (24) angeordnet ist und stromaufwärts des ersten Drei-Wege-Katalysators (24) ein zweiter Drei-Wege-Katalysators (28) vorgesehen ist, wobei in Strömungsrichtung eines Abgases stromab eines Auslasses (22) der Brennkraftmaschine (10) und stromabwärts des zweiten Drei-Wege-Katalysator und stromaufwärts des ersten Drei-Wege-Katalysators (24) ein Einspritzventil (26) zur Einbringung von Kraftstoff in den Abgaskanal (20) angeordnet ist, umfassend folgende Schritte:
- Betreiben der Brennkraftmaschine (10) in einem Scavenging-Betrieb;
- Einleiten eines überstöchiometrischen Abgases in den Abgaskanal (20);
- Eindosieren von Kraftstoff in den Abgaskanal (20) stromabwärts des zweiten Drei-Wege-Katalysators (28) und stromaufwärts des ersten Drei-Wege-Katalysators (24), sodass sich am Eingang des ersten Drei-Wege-Katalysators (24) ein stöchiometrisches Abgas einstellt und
- Nachbehandeln des stöchiometrischen Abgases durch den ersten Drei-Wege-Katalysator (24).

2. Verfahren nach Anspruch 1, **dadurch gekennzeichnet, dass** stromab des ersten Drei-Wege-Katalysators (24) eine Lambda-Sonde (30) im Abgaskanal (20) angeordnet ist, wobei eine Dosierung der Kraftstoffmenge durch das Einspritzventil (26) durch die Lambda-Sonde (30) geregelt wird.

3. Verfahren nach einem der Ansprüche 1 bis 2, **dadurch gekennzeichnet, dass** der Verdichter (18) von einer Turbine (32) im Abgaskanal (20) angetrieben wird.

4. Verfahren nach Anspruch 3, wobei eine Eindosierung des Kraftstoffes in den Abgaskanal (20) stromab der Turbine (32) und stromauf des ersten Drei-Wege-Katalysators (24) erfolgt.

5. Brennkraftmaschine (10) mit einer Vorrichtung zur Abgasnachbehandlung, umfassend: eine variable Ventilsteuereinrichtung (12), mit der Öffnungszeiten der Einlassventile (14) und/oder der Auslassventile (16) der Brennkraftmaschine (10) veränderbar sind, mit einem Verdichter (18) zur Frischluftversorgung der Brennkraftmaschine (10), sowie mit einem Abgaskanal (20), wobei im Abgaskanal (20) in Strömungsrichtung eines Abgases stromab eines Auslasses (22) der Brennkraftmaschine (10) ein erster Drei-Wege-Katalysator (24) angeordnet ist, **dadurch gekennzeichnet, dass** stromab des Auslasses (22) und stromauf des ersten Drei-Wege-Katalysators (24) ein Einspritzventil (26) zur Einbringung von Kraftstoff in den Abgaskanal (20) angeordnet ist, wobei stromabwärts des Auslasses (22) und stromaufwärts des ersten Drei-Wege-Katalysators (24) ein zweiter Drei-Wege-Katalysator (28) im Abgaskanal (20) angeordnet ist, und wobei die Brennkraftmaschine (10) zur Durchführung eines Verfahrens nach einem der Ansprüche 1 bis 4 ausgebildet ist.

6. Brennkraftmaschine (10) nach Anspruch 5, **dadurch gekennzeichnet, dass** zumindest einer der Drei-Wege-Katalysatoren (24, 28) als eine drei-Wege-katalytisch wirksame Beschichtung auf einem Partikelfilter (34) ausgebildet ist.

7. Brennkraftmaschine (10) nach Anspruch 5 oder 6, **dadurch gekennzeichnet, dass** der zweite Drei-Wege-Katalysator (28) motornah, und der erste Drei-Wege-Katalysator (24) motorfern, insbesondere in einer Unterbodenlage eines Kraftfahrzeuges, angeordnet ist.

8. Brennkraftmaschine (10) nach einem der Ansprüche 5 bis 7, **dadurch gekennzeichnet, dass** stromauf des zweiten Drei-Wege-Katalysators (28), zwischen dem zweiten Drei-Wege-Katalysator (28) und dem ersten Drei-Wege-Katalysator (24), sowie stromab des ersten Drei-Wege-Katalysators (24) jeweils eine Lambda-Sonde (30, 36, 38) angeordnet ist.

## Claims

1. A method for exhaust gas aftertreatment of an internal combustion engine (10), wherein the internal combustion engine (10) is supplied with fresh air by means of a compressor (18) and has an adjustable valve control device (12) for the intake valves (14) and/or the exhaust valves (16), and wherein the internal combustion engine (10) is connected to an exhaust gas duct (20), and in the exhaust gas duct (20) a first three-way catalytic converter (24) is arranged and upstream of the first three-way catalytic converter (24) a second three-way catalytic converter (28) is provided, wherein in the flow direction of an exhaust gas downstream of an outlet (22) of the internal combustion engine (10) and downstream of the second three-way catalytic converter and upstream of the first three-way catalytic converter (24) an injection valve (26) for introducing fuel into the exhaust gas duct (20) is arranged, comprising the following steps:
- operating the internal combustion engine (10) in scavenging mode;
- introducing a lean-burn exhaust gas into the exhaust gas duct (20);
- metering fuel into the exhaust gas duct (20) downstream of the second three-way catalytic converter (28) and upstream of the first three-way catalytic converter (24), so that a stoichiometric exhaust gas collects at the inlet port of the first three-way catalytic converter (24) and
- after treating the stoichiometric exhaust gas by the first three-way catalytic converter (24).

2. The method according to claim 1, **characterized in that** downstream of the first three-way catalytic converter (24) a Lambda probe (30) is arranged in the exhaust gas duct (20), wherein metering of the fuel quantity through the injection valve (26) is regulated by the Lambda probe (30).

3. The method according to one of claims 1 to 2, **characterized in that** the compressor (18) is driven by a turbine (32) in the exhaust gas duct (20).

4. The method according to claim 3, wherein metering of the fuel into the exhaust gas duct (20) occurs downstream of the turbine (32) and upstream of the first three-way catalytic converter (24).

5. An internal combustion engine (10) with an apparatus for exhaust gas aftertreatment comprising: a variable valve control device (12), with which opening times of the intake valves (14) and/or of the exhaust valves (16) of the internal combustion engine (10) are alterable, with a compressor (18) for supplying the internal combustion engine (10) with fresh air, and with an exhaust gas duct (20), wherein in the exhaust gas duct (20) in the flow direction of an exhaust gas downstream of an exhaust (22) of the internal combustion engine (10) a first three-way catalytic converter (24) is arranged, **characterized in that** downstream of the exhaust (22) and upstream of the first three-way catalytic converter (24) an injection valve (26) for introducing fuel into the exhaust gas duct (20) is arranged, wherein downstream of the exhaust (22) and upstream of the first three-way catalytic converter (24) a second three-way catalytic converter (28) is arranged in the exhaust gas duct (20), and wherein the internal combustion engine (10) for performing a method according to one of claims 1 to 4 is configured.

6. The internal combustion engine (10) according to claim 5, **characterized in that** at least one of the three-way catalytic converters (24, 28) is configured as a three-way catalytically effective coating on a particle filter (34).

7. The internal combustion engine (10) according to claim 5 or 6, **characterized in that** the second three-way catalytic converter (28) is arranged near the engine and the first three-way catalytic converter (24) is arranged far from the engine, particularly in an underside position of a motor vehicle.

8. The internal combustion engine (10) according to one of claims 5 to 7, **characterized in that** upstream of the second three-way catalytic converter (28), between the second three-way catalytic converter (28) and the first three-way catalytic converter (24), and downstream of the three-way catalytic converter (24), a Lambda probe (30, 36, 38) is arranged.

## Revendications

1. Procédé de retraitement des gaz d'échappement d'un moteur à combustion interne (10), dans lequel le moteur à combustion interne (10) est alimenté en air frais au moyen d'un compresseur (18) et comporte un dispositif de commande de soupape réglable (12) pour les soupapes d'admission (14) et/ou les soupapes d'échappement (16), et dans lequel le moteur à combustion interne (10) est relié à un canal de gaz d'échappement (20), et dans le canal de gaz d'échappement (20) un premier catalyseur à trois voies (24) est agencé et en amont du premier catalyseur à trois voies (24) un deuxième catalyseur à trois voies (28) est prévu, dans lequel dans la direction du flux d'un gaz d'échappement en aval d'une sortie (22) du moteur à combustion interne (10) et en aval du deuxième catalyseur à trois voies et en amont du premier catalyseur à trois voies (24) une soupape d'injection (26) est agencée pour l'introduction du carburant dans le canal de gaz d'échappement (20), comprenant les étapes suivantes:
- faire fonctionner le moteur à combustion interne (10) dans un mode balayage;
- introduire un gaz d'échappement surstœchiométrique dans le canal de gaz d'échappement (20);
- doser le carburant dans le canal de gaz d'échappement (20) en aval du deuxième catalyseur à trois voies (28) et en amont du premier catalyseur à trois voies (24), de sorte qu'à l'entrée du premier catalyseur à trois voies (24) un gaz d'échappement stœchiométrique est présent et
- retraiter le gaz d'échappement stœchiométrique à travers le premier catalyseur à trois voies (24).

2. Procédé selon la revendication 1, **caractérisé en ce que**, en aval du premier catalyseur à trois voies (24) une sonde lambda (30) est agencée dans le canal de gaz d'échappement (20), dans lequel un dosage de la quantité de carburant à travers la soupape d'injection (26) est réglé par la sonde lambda (30).

3. Procédé selon l'une des revendications 1 à 2, **caractérisé en ce que** le compresseur (18) est actionné par une turbine (32) dans le canal de gaz d'échappement (20).

4. Procédé selon la revendication 3, dans lequel un dosage du carburant a lieu dans le canal de gaz d'échappement (20) en aval de la turbine (32) et en amont du premier catalyseur à trois voies (24).

5. Moteur à combustion interne (10) avec un appareil de retraitement des gaz d'échappement, comprenant : un dispositif de commande de soupape variable (12), avec lequel des durées d'ouverture des soupapes d'admission (14) et/ou des soupapes d'échappement (16) du moteur à combustion interne (10) peuvent être modifiées, avec un compresseur (18) pour l'alimentation en air frais du moteur à combustion interne (10), et avec un canal de gaz d'échappement (20), dans lequel un premier catalyseur à trois voies (24) est agencé dans le canal de gaz d'échappement (20) dans la direction du flux d'un gaz d'échappement en aval d'une sortie (22) du moteur à combustion interne (10), **caractérisé en ce que**, en aval de la sortie (22) et en amont du premier catalyseur à trois voies (24) une soupape d'injection (26) est agencée pour l'introduction de carburant dans le canal de gaz d'échappement (20), dans lequel en aval de la sortie (22) et en amont du premier catalyseur à trois voies (24) un deuxième catalyseur à trois voies (28) est agencé dans le canal de gaz d'échappement (20), et dans lequel le moteur à combustion interne (10) est conformé pour la réalisation d'un procédé selon l'une des revendications 1 à 4.

6. Moteur à combustion interne (10) selon la revendication 5, **caractérisé en ce que** au moins un des catalyseurs à trois voies (24, 28) est conformé comme un revêtement actif de manière catalytique à trois voies sur un filtre à particules (34).

7. Moteur à combustion interne (10) selon la revendication 5 ou 6, **caractérisé en ce que** le deuxième catalyseur à trois voies (28) est agencé à proximité du moteur, et le premier catalyseur à trois voies (24) est agencé loin du moteur, en particulier dans une position sous le plancher d'un véhicule automobile.

8. Moteur à combustion interne (10) selon l'une des revendications 5 à 7, **caractérisé en ce que**, une sonde lambda (30, 36, 38) est agencée respectivement en amont du deuxième catalyseur à trois voies (28), entre le deuxième catalyseur à trois voies (28) et le premier catalyseur à trois voies (24), ainsi qu'en aval du premier catalyseur à trois voies (24).
